# EUROPÄISCHE PATENTSCHRIFT

(11) **EP 3 108 733 B1**
(45) Veröffentlichungstag und Bekanntmachung des Hinweises auf die Patenterteilung: **14.03.2018**
(21) Anmeldenummer: 16401033.2
(22) Anmeldetag: 26.05.2016
(51) Int. Cl.: A01C 7/08, B65G 53/42, A01C 15/00

(54) **VORRICHTUNG ZUM FÖRDERN VON AUF EINER LANDWIRTSCHAFTLICHEN FLÄCHE AUSZUBRINGENDEM GRANULAREM MATERIAL MIT VERBESSERTER LUFTSTRÖMUNG**
DEVICE FOR CONVEYING GRANULAR MATERIAL TO BE APPLIED TO AN AGRICULTURAL AREA, WITH IMPROVED AIR FLOW
DISPOSITIF DE TRANSPORT A FLUX D'AIR AMELIORE DE MATERIAU GRANULAIRE A EPANDRE SUR UNE SURFACE AGRICOLE

(30) Priorität: 23.06.2015 DE 102015110009
(43) Veröffentlichungstag der Anmeldung: 28.12.2016
(73) Patentinhaber: Amazonen-Werke H. Dreyer GmbH & Co. KG, 49205 Hasbergen (DE)
(72) Erfinder: Wien, Thomas, 28816 Stuhr (DE)

(56) Entgegenhaltungen:
- EP-A1- 0 513 582
- DE-A1- 3 003 919
- FR-A- 1 361 034
- GB-A- 191 504 814
- US-A- 3 031 233
- US-A- 4 474 327
- US-B1- 7 311 474

## Beschreibung

Die vorliegende Erfindung betrifft eine Vorrichtung zum Fördern von auf einer landwirtschaftlichen Fläche auszubringendem granularem Material.

Derartige Vorrichtungen finden beispielsweise in Einzelkornsämaschinen Anwendung, um Saatgut, welches in einem zentralen Saatgutvorratsbehälter angeordnet ist, zu den einzelnen Vereinzelungsgehäusen zu transportieren. Eine solche Vorrichtung ist beispielsweise aus der EP 2 298 056 B1 und der EP 2 591 656 bekannt.

Um das Saatgut aus dem zentralen Saatgutvorratsbehälter in den Förderstrom zu den einzelnen Vereinzelungsgehäusen zu bringen, ist es bekannt, Luft über ein Rohr in den Vorratsbehälter so einzublasen, dass die Luft wie auch das Saatgut in einem weiteren konzentrisch im Inneren des Rohrs liegenden Kernrohr aus dem zentralen Saatgutvorratsbehälter ausgebracht wird. Das Kernrohr bildet dabei den ersten Teil eines pneumatischen Förderkanals, der zu den separaten Vereinzelungsgehäusen führt. Ein solches System ist in der den Oberbegriff des Anspruches 1 bildenden EP 0 513 582 A1 beschrieben. Ähnliche Systeme finden auch in anderen Sämaschinen Anwendung, um Saatgut von einem zentralen Saatgutvorratsbehälter zu den jeweiligen Säaggregaten zu fördern.

Um das Saatgut effizient aus dem Vorratsbehälter zu leiten, verwenden bekannte Systeme jedoch üblicherweise Rührelemente oder ein Fließbett zum Aufwirbeln des Saatguts im Ansaugbereich. Die zusätzlichen Rührelemente bedeuten zusätzlichen mechanischen Aufwand. Das Fließbett ist verschmutzungsanfällig, was zu einem schlechten pneumatischen Wirkungsgrad führen kann.

Aufgabe der vorliegenden Erfindung ist es daher, eine Vorrichtung zum Fördern von auf einer landwirtschaftlichen Fläche auszubringendem granularem Material bereitzustellen, welche eine verbesserte pneumatische Nachlieferung des granularen Materials aus einem zentralen Vorratsbehälter ermöglicht. Diese Aufgabe wird durch eine Vorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, zwei Umlenkelemente zu verwenden, um einströmende Luft in Richtung der Längsachse des Kernrohres umzulenken. Es hat sich herausgestellt, dass durch diese Maßnahme die Aufnahme des Saatguts in das Kernrohr verbessert wird. Auf zusätzliche Rührelemente oder die Ausbildung eines Fließbettes zum Aufwirbeln des Saatguts kann daher verzichtet werden. Durch die Umlenkelemente wird die Luft insbesondere bereits beim Austritt aus dem Spalt zwischen Mantelrohr und Kernrohr in eine gewünschte Richtung gelenkt, insbesondere in Richtung des Inneren des Kernrohres, in der die pneumatische Förderung des granularen Materials zur Säeinrichtung (auch Säaggregat genannt) stattfinden soll.

Die Vorrichtung umfasst zwei als Nasen ausgebildete Umlenkelemente, die jeweils eine in Richtung der Längsachse des Kernrohrs weisende Luftauslassöffnung umfassen, wobei sich die Luftauslassöffnungen der Umlenkelemente diametral gegenüberliegen. Auf diese Weise kann der Luftstrom vorteilhaft in Richtung der Längsachse des Kernrohres und weiter in die Förderluftströmung innerhalb des Kernrohrs umgelenkt werden.

Bei der Vorrichtung kann es sich insbesondere um ein Nachfüllsystem für eine Säeinrichtung einer landwirtschaftlichen Sämaschine handeln. Ein derartiges Nachfüllsystem wird auch als "Nursingsystem" bezeichnet.

Bei dem Vorratsbehälter kann es sich insbesondere um einen zentralen Vorratsbehälter handeln, von dem aus granulares Material an die Säeinrichtung förderbar ist. Es können auch mehrere Säeinrichtungen vorgesehen sein. In diesem Fall kann der Vorratsbehälter mit jeder der Säeinrichtungen über einen separaten pneumatischen Förderkanal zum pneumatischen Fördern von granularem Material an die jeweilige Säeinrichtung verbunden sein. Die pneumatischen Förderkanäle können sich auch wenigstens teilweise überschneiden.

Der Vorratsbehälter kann insbesondere zwei miteinander verbundene Kammern umfassen. Eine dieser Kammern kann derart ausgebildet sein, dass über sie das granulare Material in den pneumatischen Förderkanal einspeisbar ist. Diese Kammer kann als Nursingkammer bezeichnet werden.

Der pneumatische Förderkanal kann in diesem Fall insbesondere in die Nursingkammer münden und teilweise im Inneren der Nursingkammer angeordnet sein.

In diesem Fall kann die zweite Kammer als Nursingtank bezeichnet werden und zum Vorhalten des granularen Materials dienen. Dieser Nursingtank kann insbesondere wenigstens teilweise oberhalb der Nursingkammer angeordnet sein. Die Verbindung zwischen Nursingkammer und Nursingtank kann verschließbar sein.

Bei dem granularen Material kann es sich insbesondere um Saatgut handeln, alternativ oder zusätzlich jedoch auch um Düngemittel oder Pestizid.

Die Säeinrichtung kann eine Dosiereinrichtung, insbesondere eine Vereinzelungseinrichtung, umfassen oder einer solchen entsprechen.

Die Säeinrichtung, insbesondere die Vereinzelungseinrichtung, kann ein mit einem Überdruck beaufschlagtes Gehäuse, insbesondere Vereinzelungsgehäuse, umfassen. Das Gehäuse kann einen dezentralen Sammelbehälter für das über den pneumatischen Förderkanal zugeführte granulare Material umfassen. Der pneumatische Förderkanal kann dabei in das Gehäuse, insbesondere in den dezentralen Sammelbehälter, münden.

Die Vereinzelungseinrichtung kann zumindest eine mit einer Druckdifferenz beaufschlagbare Vereinzelungstrommel oder Vereinzelungsscheibe umfassen. Eine Vereinzelungstrommel oder Vereinzelungsscheibe kann insbesondere in Perforationsreihen angeordnete Perforationen aufweisen. An diesen Perforationen kann sich das granulare Material anlagern, wodurch es zu einer Vereinzelung kommt.

Die Vorrichtung kann außerdem ein Gebläse zum Einbringen von Luft in den pneumatischen Förderkanal umfassen. Mit Hilfe des Gebläses kann insbesondere im pneumatischen Förderkanal ein entsprechender Förderluftstrom erzeugt werden, mit dem das granulare Material pneumatisch gefördert werden kann. Durch das Gebläse kann im pneumatischen Förderkanal insbesondere ein Überdruck gegenüber dem Atmosphärendruck erzeugt werden.

Das Kernrohr und/oder das Mantelrohr können wenigstens abschnittsweise von einem Führungsrohr umgeben sein, wobei das Führungsrohr eine Lufteinlassöffnung aufweist, die über einen Zufuhrkanal mit dem Gebläse verbunden ist. Auf diese Weise kann die Luft in den Spalt zwischen Kernrohr und Mantelrohr eingebracht werden.

Insbesondere kann die Vorrichtung so ausgebildet sein, dass Luft von der Lufteinlassöffnung in einen Bereich oder Spalt zwischen dem Kernrohr und dem Mantelrohr strömen kann.

Das Kernrohr und das Mantelrohr können insbesondere konzentrisch zueinander angeordnet sein. Kernrohr und/oder Mantelrohr können zylindrisch ausgebildet sein. Das Mantelrohr kann einen Innendurchmesser aufweisen, der größer ist als der Außendurchmesser des Kernrohres. Der für das Durchströmen der Luft zwischen Kernrohr und Mantelrohr verfügbare Spalt oder Bereich kann somit senkrecht zur Luftströmungsrichtung eine Ausdehnung aufweisen, die der Differenz zwischen dem Innenradius des Mantelrohrs und dem Außenradius des Kernrohrs entspricht.

Das Führungsrohr kann ebenfalls wenigstens teilweise zylindrisch ausgebildet sein. Insbesondere kann auch das Führungsrohr konzentrisch zum Kernrohr und/oder Mantelrohr angeordnet sein.

Das Führungsrohr kann mit der Wandung des Vorratsbehälters, insbesondere der Wandlung der Nursingkammer verbunden sein. Das Mantelrohr kann wiederum am Führungsrohr befestigt sein. Alternativ oder zusätzlich kann das Mantelrohr auch über eine Befestigungseinrichtung an der Wandung des Vorratsbehälters, insbesondere der Nursingkammer, befestigt sein.

Das Umlenkelement kann insbesondere Teil des Mantelrohrs sein oder am Mantelrohr befestigt sein. Insbesondere kann das Umlenkelement nicht zerstörungsfrei lösbar am Mantelrohr angeordnet, beispielsweise angeschweißt, sein.

Die Öffnung des Kernrohrs kann insbesondere im Inneren des Vorratsbehälters, insbesondere im Inneren der Nursingkammer, angeordnet sein. Die Umlenkelemente können in Längsrichtung des Kernrohres über die Öffnung des Kernrohres hinausragen und einen Luftkanal aufweisen, der fluidisch mit dem Bereich zwischen dem Kernrohr und dem Mantelrohr verbunden ist und eine Krümmung in Richtung der Längsachse des Kernrohres aufweist. Auf diese Weise wird die aus dem Spalt zwischen Kern und Mantelrohr ausströmende Luft auf einfache Weise in Richtung der Längsachse des Kernrohres umgelenkt.

Der pneumatische Förderkanal kann insbesondere in einer vertikalen Richtung in den Vorratsbehälter, insbesondere in die Nursingkammer, münden. Mit anderen Worten kann die Orientierung des Förderkanals im Bereich der Mündung in den Vorratsbehälter im Wesentlichen senkrecht sein, insbesondere mit der Horizontalen einen Winkel zwischen 85° und 95° einschließen. Der Winkel kann dabei insbesondere zwischen der Längsachse des Kernrohres und der Horizontalen bestimmt werden.

Das Kernrohr kann über den zentralen Vorratsbehälter hinausragen und entweder eigenständig oder in Verbindung mit weiteren Leitungsabschnitten oder Rohren den pneumatischen Förderkanal zur Säeinrichtung oder zu den Säeinrichtungen bilden.

Vom Zufuhrkanal zwischen Gebläse und Lufteinlassöffnung des Führungsrohres oder unmittelbar vom Gebläse kann eine Bypassleitung abzweigen, die außerhalb des Vorratsbehälters in den pneumatischen Förderkanal mündet. Eine derartige Bypassleitung kann die pneumatische Förderung des granularen Materials im pneumatischen Förderkanal unterstützen. Außerdem können Verstopfungen im pneumatischen Förderkanal vermieden werden, wenn nach einer Unterbrechung des Förderns des granularen Materials im pneumatischen Förderkanal beim Wiederanlaufen des Förderprozesses das verbleibende granulare Material mit Hilfe von Luft aus der Bypassleitung zur Säeinrichtung geblasen wird, bevor neues Material aus dem Vorratsbehälter in den Förderkanal eingebracht wird.

In der Bypassleitung kann ein Drosselventil angeordnet sein. Dadurch kann die Luftmenge im Bypass für eine optimale Förderung variiert werden. Die zwei Umlenkelemente können eine in Richtung der Längsachse des Kernrohrs weisende Luftauslassöffnung umfassen, wobei die Größe der Luftauslassöffnung einstellbar ist, insbesondere mittels einer oder mehrerer Gewindestangen. Dadurch kann die Strömungsgeschwindigkeit variiert werden. Die Größe der Luftauslassöffnung kann insbesondere kleiner sein als die Querschnittsfläche des Ringspalts zwischen Kernrohr und Mantelrohr. Dadurch wird die Strömungsgeschwindigkeit der in Richtung der Längsachse des Kernrohres strömenden Luft erhöht. Dies wiederum verbessert die Aufnahme von granularem Material in den Förderluftstrom. Die Umlenkelemente können insbesondere Teil des Mantelrohrs sein oder mit dem Mantelrohr verbunden sein, wobei das Mantelrohr über eine oder mehrere, insbesondere zwei, Gewindestangen mit einer Wandung des Vorratsbehälters, insbesondere der Nursingkammer, verbunden ist. Mit Hilfe der Gewindestangen kann die Position des Mantelrohrs (und damit des Umlenkelements) relativ zur Öffnung des Kernrohrs variiert werden. Dies wiederum erlaubt die Einstellung der Größe der Luftauslassöffnung des Umlenkelements.

Die Vorrichtung umfasst zwei Umlenkelemente, die jeweils eine in Richtung der Längsachse des Kernrohrs weisende Luftauslassöffnung umfassen, wobei sich die Luftauslassöffnungen der Umlenkelemente diametral gegenüberliegen. Auf diese Weise kann der Luftstrom vorteilhaft in Richtung der Längsachse des Kernrohres und weiter in die Förderluftströmung innerhalb des Kernrohrs umgelenkt werden.

Im Kernrohr kann wenigstens eine Bohrung vorgesehen sein, über die Luft von der Lufteinlassöffnung unmittelbar in das Kernrohr strömen kann. Auf diese Weise kann alternativ oder zusätzlich zur oben genannten Bypassleitung Luft zum Unterstützen der Förderung im pneumatischen Luftkanal sowie zum Vermeiden von Verstopfungen in das Kernrohr eingespeist werden.

Die oben genannte Vorrichtung kann insbesondere Teil eines landwirtschaftlichen Geräts zum Ausbringen von granularem Material auf einer landwirtschaftlichen Fläche sein. Bei dem landwirtschaftlichen Gerät kann es sich insbesondere um eine Sämaschine handeln. Mit anderen Worten stellt die Erfindung außerdem eine Sämaschine bereit, welche eine der oben genannten Vorrichtungen umfasst. Die Sämaschine kann insbesondere eine Einzelkornsämaschine sein.

Weitere Merkmale und Vorteile der Erfindung werden nachfolgend anhand der beispielhaften Figuren erläutert. Dabei zeigt:
- Figur 1: eine schematische Darstellung einer erfindungsgemäßen Vorrichtung;
- Figur 2: eine perspektivische Ansicht von Elementen der erfindungsgemäßen Vorrichtung;
- Figur 3: einen Querschnitt durch einen Teil einer erfindungsgemäßen Vorrichtung;
- Figur 4: einen weiteren Querschnitt durch einen Teil einer erfindungsgemäßen Vorrichtung;
- Figur 5: eine perspektivische Ansicht von Elementen einer erfindungsgemäßen Vorrichtung; und
- Figur 6: einen Querschnitt der Darstellung nach Figur 5.

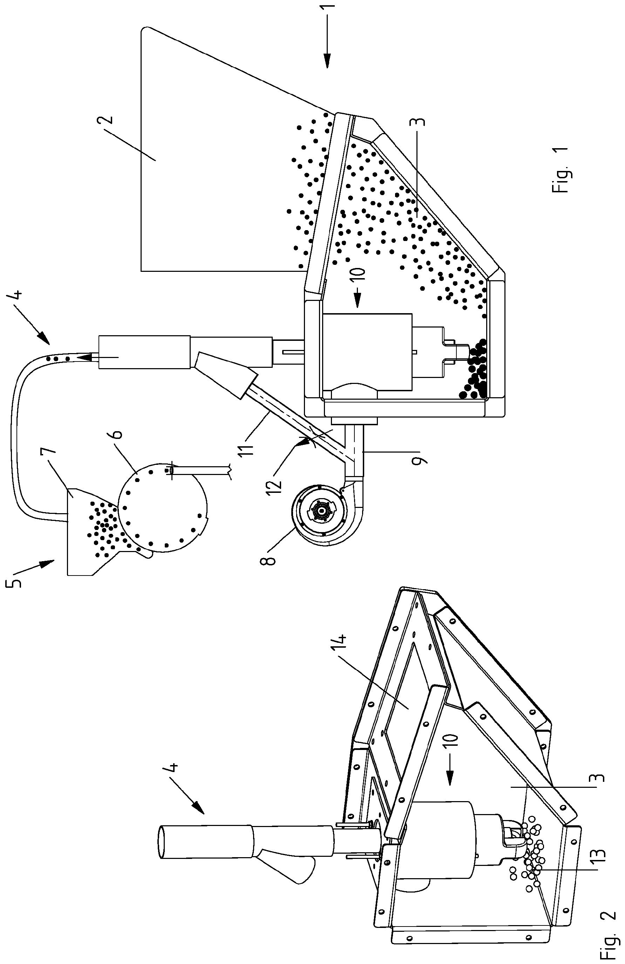

Figur 1 zeigt schematisch ein Beispiel einer Vorrichtung zum Fördern von auf einer landwirtschaftlichen Fläche auszubringendem granularem Material. Die Vorrichtung umfasst dabei einen zentralen Vorratsbehälter 1 für das auszubringende granulare Material. Der Vorratsbehälter 1 umfasst dabei zwei Elemente, nämlich ein Vorratsreservoir 2 (auch Nursingtank genannt) und eine Einspeiseeinrichtung 3 (auch Nursingkammer genannt). Die Einspeiseeinrichtung 3 dient dazu, granulares Material in einen pneumatischen Förderkanal 4 einzuspeisen.

Bei dem granularen Material kann es sich insbesondere um Saatgut, alternativ jedoch auch um granularen Dünger oder granulare Pestizide handeln.

Der pneumatische Förderkanal 4 verbindet den zentralen Fördertank 1 mit einer Vereinzelungsvorrichtung 5, welche eine Vereinzelungstrommel oder Vereinzelungsscheibe 6 sowie einen dezentralen Sammelbehälter 7 für das granulare Material aufweist. Die Vereinzelungseinrichtung 5 kann insbesondere einer bekannten Vereinzelungseinrichtung einer Einzelkornsämaschine entsprechen. Weitere Details zur Vereinzelungseinrichtung 5 werden hierin daher nicht angegeben.

Die vorliegende Erfindung ist jedoch nicht auf Einzelkorntechnik beschränkt. Anstelle der Vereinzelungsvorrichtung 5 und der Vereinzelungsscheibe 6 können auch andere Säaggregate und Dosiereinrichtungen jeder Bauart vorgesehen sein.

Die Säeinrichtung kann auch Abgabeelemente umfassen, um das granulare Material im Boden abzulegen. Bei diesen Abgabeelementen, hier nicht dargestellt, kann es sich beispielsweise um Säschare handeln.

Figur 1 zeigt außerdem ein Gebläse 8, welches über einen Zufuhrkanal 9 mit einem Abschnitt 10 des pneumatischen Förderkanals 4 verbunden ist, der im Inneren der Nursing-kammer 3 angeordnet ist. Der Abschnitt 10 des pneumatischen Förderkanals 4 wird im Folgenden noch detailliert beschrieben.

Vom Zufuhrkanal 9 zweigt in diesem Beispiel eine Bypassleitung 11 ab, die außerhalb der Nursingkammer 3 in den pneumatischen Förderkanal 4 mündet. Diese Bypassleitung 11 dient zur Verbesserung der Förderung des granularen Materials in dem pneumatischen Förderkanal 4. Ferner kann beim Wiederanlaufen des Förderprozesses nach einer Unterbrechung im pneumatischen Förderkanal 4 verbleibendes granulares Material zur Vereinzelung gefördert werden, bevor über die Nursingkammer 3 erneut granulares Material nachgeliefert wird. So wird einer Verstopfung im pneumatischen Förderkanal 4 vorgebeugt.

In der Bypassleitung 11 ist ein Drosselventil 12 vorgesehen, mit dem die Luftmenge in der Bypassleitung 11 einstellbar ist.

Figur 2 zeigt perspektivisch eine Ansicht der Nursingkammer 3 sowie von Teilen des pneumatischen Förderkanals 4. Schematisch dargestellt ist Saatgut 13, welches sich in einem Bodenbereich der Nursingkammer 3 befindet. Zu sehen ist außerdem eine Durchgangsöffnung 14, welche die Nursingkammer 3 mit dem Nursingtank 2 verbindet. Diese Öffnung 14 kann verschließbar sein.

Schließlich ist in Figur 2 auch der Abschnitt 10 des pneumatischen Förderkanals 4 zu sehen, der im Inneren Nursingkammer 3 angeordnet ist.

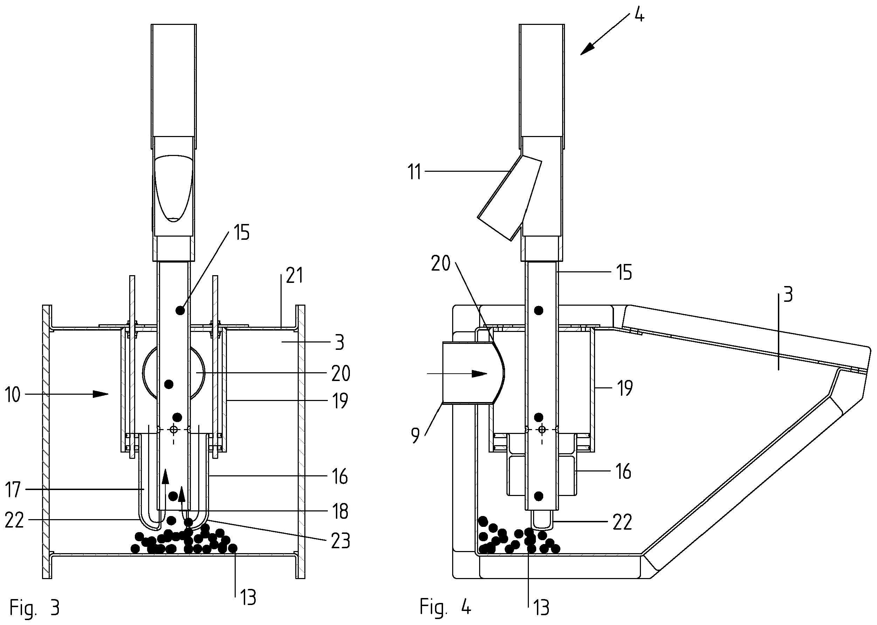

Die Struktur dieses Abschnitts 10 wird aus dem Querschnitt der Figur 3 genauer ersichtlich. Wie man der Figur 3 entnehmen kann, umfasst Abschnitt 10, der im Inneren der Nursingkammer 3 angeordnet ist, ein Kernrohr 15 sowie ein Mantelrohr 16, welches das Kernrohr 15 wenigstens abschnittsweise umgibt. Sowohl Kernrohr 15 als auch Mantelrohr 16 sind in diesem Beispiel zylindrisch ausgebildet und konzentrisch zueinander angeordnet. Der Innendurchmesser des Mantelrohrs 16 ist dabei größer als der Außendurchmesser des Kernrohrs 15. Dadurch entsteht ein Bereich oder Spalt 17, in dem Luft zwischen Mantelrohr und Kernrohr in Richtung einer in der Nursingkammer 3 angeordneten Öffnung 18 des Kernrohrs 15 strömen kann. Die Luftströmung ist durch Pfeile in der Figur 3 veranschaulicht.

Das Mantelrohr 16 und das Kernrohr 15 werden abschnittsweise außerdem durch ein Führungsrohr 19 umgeben, das in diesem Beispiel ebenfalls zylindrisch ausgebildet ist und konzentrisch zum Kernrohr 15 und zum Mantelrohr 16 angeordnet ist. Das Führungsrohr 19 weist eine in Figur 3 nur teilweise ersichtliche Öffnung 20 auf, über die die Zufuhrleitung 9 aus Figur 1 vom Gebläse in das Führungsrohr 19 mündet. Über die Öffnung 20 einströmende Luft vom Gebläse wird in Richtung der Öffnung 18 durch den Spalt 17 zwischen Kernrohr 15 und Mantelrohr 16 geleitet.

Das Führungsrohr 19 ist hier mit einem oberen Wandungsteil 21 der Nursingkammer 3 verbunden.

In Figur 3 erkennt man, dass das Mantelrohr 16 zwei gegenüberliegende Umlenkelemente 22, 23 umfasst, die in Längsrichtung des Kernrohrs 15 über die Öffnung 18 hinausragen. Diese Umlenkelemente 22, 23 sind so ausgebildet, dass Luft, die durch den Spalt 17 zwischen Kernrohr 15 und Mantelrohr 16 in Richtung der Öffnung 18 strömt, zur Längsachse des Kernrohrs 15 umgelenkt wird. Dadurch entsteht ein Förderluftstrom, der entgegengesetzt zur ursprünglichen Strömungsrichtung im Spalt 17 gerichtet ist, und innerhalb des Kernrohres in Förderrichtung zur in der Figur 1 gezeigten Vereinzelungseinrichtung 5 führt. Diese Förderluftströmung nimmt granulares Material 13 auf, welches im Bodenbereich der Nursingkammer 3 angeordnet ist. Figur 4 zeigt einen weiteren Querschnitt durch die Darstellung der Figur 2. Die Schnittebene ist hier um 90° gegenüber der Schnittebene der Figur 3 gedreht.

In der Figur 4 ist ein Teil des Zufuhrkanals 9 zu sehen, der über die Öffnung 20 in das Führungsrohr 19 mündet.

Auch ist eines der Umlenkelemente 22 in Figur 4 zu sehen. Es ist ersichtlich, dass es sich bei dem Umlenkelement 22 um eine Nase handelt, welche eine Krümmung aufweist, die zur Mittelachse des Kernrohrs 15 hin gekrümmt ist. Das Umlenkelement 23, das dem Umlenkelement 22 diametral gegenüberliegt, ist entsprechend ausgebildet. Ebenfalls aus den Figuren 1 bis 4 ersichtlich ist, dass der pneumatische Förderkanal 4 und insbesondere das Kernrohr 15 in einer vertikalen Richtung (senkrecht) in den Vorratsbehälter 1, insbesondere in die Nursingkammer 3, mündet. Dadurch ist eine kompakte Anordnung möglich.

Granulares Material, das wie soeben beschrieben in das Kernrohr 15 eingebracht wird, kann durch die Luftströmung im Kernrohr 15 dann entlang des pneumatischen Förderkanals 4 weiter zur Vereinzelungseinrichtung 5 gefördert werden. Zur Unterstützung des Transports kann Luft vom Gebläse 8 über die Bypassleitung 11 in den pneumatischen Förderkanal 4 eingebracht werden, wie in Figur 1 dargestellt. In Figur 4 ist ein Teil der Bypassleitung 11 zu sehen, die in den pneumatischen Förderkanal 4 mündet.

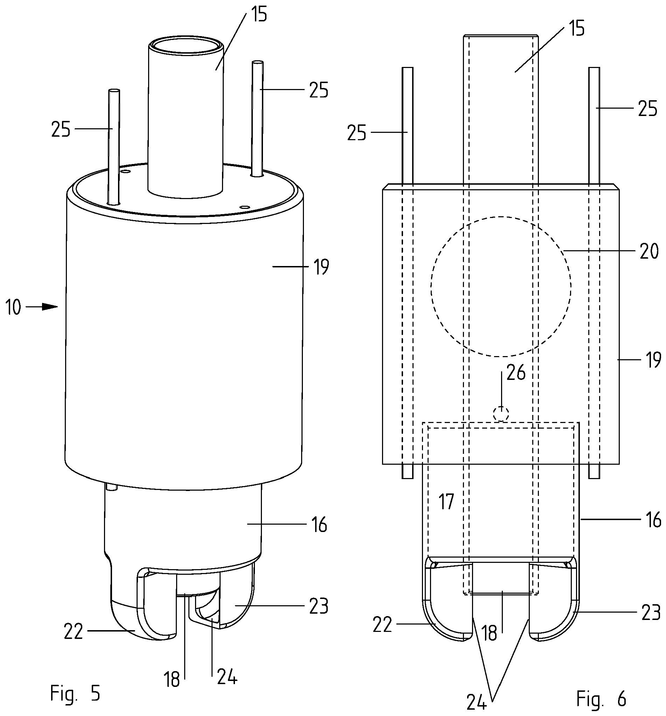

Die Figuren 5 und 6 zeigen nochmals im Detail den Abschnitt 10 des pneumatischen Förderkanals, der im Inneren der Nursingkammer 3 angeordnet ist. Figur 5 zeigt dabei eine perspektivische Ansicht, während Figur 6 einen Querschnitt der Ansicht aus Figur 5 zeigt.

Zunächst zeigt Figur 5 das Führungsrohr 19, welches abschnittsweise das Kernrohr 15 und das Mantelrohr 16 umgibt. In Figur 5 sind die beiden als Nasen ausgebildeten Umlenkelemente 22 und 23 gut zu erkennen, die mit dem Mantelrohr 16 verbunden sind. In Figur 5 ist auch eine Luftauslassöffnung 24 des Umlenkelements 23 zu erkennen, welche in Richtung der Längsachse des Kernrohrs 15 weist. Aus dieser Luftauslassöffnung 24 sowie einer entsprechenden Luftauslassöffnung des Umlenkelements 22 strömt Luft aus dem Kreisspalt 17 (Figur 3) zwischen Mantelrohr 16 und Kernrohr 15 in Richtung der Längsachse des Kernrohrs 15 und insbesondere in Richtung der Öffnung 18 des Kernrohrs 15. Dadurch entsteht, wie beschrieben, ein Förderluftstrom innerhalb des Kernrohrs 15, der zur Vereinzelungseinrichtung 5 hin gerichtet ist, und der granulares Material aus dem Bodenbereich der Nursingkammer mitreißt und zur Vereinzelungseinrichtung 5 fördert.

Der Querschnitt der Luftauslassöffnung 24 und der entsprechenden Luftauslassöffnung des Umlenkelements 22 kann geringer sein, als der Querschnitt des Ringspalts 17 zwischen Mantelrohr 16 und Kernrohr 15. Dadurch kommt es zu einer Beschleunigung der Luftströmung, was das Mitreißen von granularem Material begünstigt. Die Größe der Luftauslassöffnung 24 und der entsprechenden Luftauslassöffnung des Umlenkelements 22 kann einstellbar sein. Dies kann mittels Gewindestangen 25 geschehen, welche die Position des Mantelrohrs 16 und damit der Umlenkelemente 22, 23 in Bezug auf die Öffnung 18 des Kernrohrs 15 einstellbar machen. Wie aus Figur 3 ersichtlich, sind die Gewindestangen 25 mit dem Mantelrohr 16 verbunden, sowie mit der oberen Gehäusewandung 21 der Nursingkammer 3. Damit kann also die Höhenposition des Mantelrohrs 16 und somit der Umlenkelemente 22, 23 eingestellt werden. Damit lässt sich auch die Größe der Auslassöffnungen 24 der Umlenkelemente 22, 23 variieren.

Figur 6 zeigt noch einen Querschnitt der Darstellung aus Figur 5. In Strichlinien ist die Öffnung 20 zu erkennen, über die der Zufuhrkanal 9 vom Gebläse in das Führungsrohr 19 mündet.

Zu sehen ist in Figur 6 auch eine Bohrung 26 im Kernrohr 15, über die Luft von der Lufteinlassöffnung 20 unmittelbar in das Kernrohr 15 strömen kann. Über diesen kann ein Teil der Luft durch die Bohrung 26 unmittelbar in das Innere des Kernrohrs 15 strömen, während ein anderer Teil über den Ringspalt 17 hin zur Öffnung 18 des Kernrohrs 15 strömt. Der Teil der Luft, der durch die Bohrung 26 strömt, kann die pneumatische Förderung des granularen Materials im Kernrohr 15 verbessern. Insbesondere kann über die Bohrung 26 ein ähnlicher Effekt erzielt werden, wie über die Bypassleitung 11 (Figur 1). Eine oder mehrerer solcher Bohrungen können daher alternativ oder zusätzlich zur Bypassleitung 11 vorgesehen sein.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind. Auch sind die Geometrie und die relative Lage der einzelnen Rohre des Abschnitts 10 nicht auf die gezeigte Geometrie beschränkt. Außerdem können auch weniger oder mehr Umlenkelemente als dargestellt vorgesehen sein. Schließlich ist die vorliegende Erfindung, wie erwähnt, nicht auf Einzelkorntechnik beschränkt und kann auch in Kombination mit anderen Säaggregaten verwendet werden.

## Patentansprüche

1. Vorrichtung zum Fördern von auf einer landwirtschaftlichen Fläche auszubringendem granularem Material, umfassend:
einen Vorratsbehälter (1) für das granulare Material;
eine Säeinrichtung (5); und
einen pneumatischen Förderkanal (4) zum pneumatischen Fördern von granularem Material vom Vorratsbehälter (1) zur Säeinrichtung (5);
wobei der pneumatische Förderkanal (4) in den Vorratsbehälter (1) mündet und teilweise im Inneren des Vorratsbehälters (1) angeordnet ist,
wobei der pneumatische Förderkanal (4) im Inneren des Vorratsbehälters (1) ein Kernrohr (15) umfasst, das wenigstens abschnittsweise von einem Mantelrohr (16) umgeben wird, **dadurch gekennzeichnet, dass** die Vorrichtung zwei Umlenkelemente (22, 23) umfasst, welche so ausgebildet sind, dass Luft, die zwischen Kernrohr (15) und Mantelrohr (16) in Richtung einer Öffnung (18) des Kernrohres (15) strömt, in Richtung der Längsachse des Kernrohres (15) umgelenkt wird, und dass zwei als Nasen ausgebildete Umlenkelemente (22, 23) vorgesehen sind, die jeweils eine in Richtung der Längsachse des Kernrohrs (15) weisende Luftauslassöffnung (24) umfassen, wobei sich die Luftauslassöffnungen (24) der Umlenkelemente (22, 23) diametral gegenüber liegen..

2. Vorrichtung nach Anspruch 1, wobei das Kernrohr (15) und/oder das Mantelrohr (16) wenigstens abschnittsweise von einem Führungsrohr (19) umgeben wird, wobei das Führungsrohr (19) eine Lufteinlassöffnung (20) aufweist, die über einen Zufuhrkanal (9) mit einem Gebläse (8) verbunden ist.

3. Vorrichtung nach Anspruch 2, wobei die Vorrichtung so ausgebildet ist, dass Luft von der Lufteinlassöffnung (20) in einen Bereich zwischen dem Kernrohr (15) und dem Mantelrohr (16) strömen kann.

4. Vorrichtung nach einem der vorangegangenen Ansprüche, wobei die Umlenkelemente (22, 23) in Längsrichtung des Kernrohres (15) über die Öffnung (18) des Kernrohres (15) hinausragen und einen Luftkanal aufweisen, der fluidisch mit dem Bereich zwischen dem Kernrohr (15) und dem Mantelrohr (16) verbunden ist und eine Krümmung in Richtung der Längsachse des Kernrohres (15) aufweist.

5. Vorrichtung nach einem der vorangegangenen Ansprüche, wobei der pneumatische Förderkanal (4) in einer vertikalen Richtung in den Vorratsbehälter (1) mündet.

6. Vorrichtung nach Anspruch 2, wobei vom Zufuhrkanal (9) oder unmittelbar vom Gebläse (8) eine Bypassleitung (11) abzweigt, die außerhalb des Vorratsbehälters (1) in den pneumatischen Förderkanal (4) mündet.

7. Vorrichtung nach einem der vorangegangenen Ansprüche, wobei die Umlenkelemente (22, 23) eine in Richtung der Längsachse des Kernrohrs (15) weisende Luftauslassöffnung (24) umfassen, wobei die Größe der Luftauslassöffnung (24) einstellbar ist, insbesondere mittels einer oder mehrerer Gewindestangen (25).

8. Vorrichtung nach einem der Ansprüche 2 - 7, wobei im Kernrohr (15) wenigstens eine Bohrung (26) vorgesehen ist, über die Luft von der Lufteinlassöffnung (20) unmittelbar in das Kernrohr (15) strömen kann.

9. Sämaschine umfassend eine Vorrichtung nach einem der vorangegangenen Ansprüche.

## Claims

1. Device for conveying granular material to be applied to an agricultural area, comprising:
a storage container (1) for the granular material;
a sowing device (5); and
a pneumatic conveying duct (4) for the pneumatic conveying of granular material from the storage container (1) to the sowing device (5);
wherein the pneumatic conveying duct (4) opens into the storage container (1) and is partially arranged in the interior of the storage container (1),
wherein, in the interior of the storage container (1), the pneumatic conveying duct (4) comprises a core tube (15) which is surrounded at least in sections by a casing tube (16), **characterized in that** the device comprises two deflecting elements (22, 23) which are designed in such a manner that air which flows between the core tube (15) and the casing tube (16) in the direction of an opening (18) in the core tube (15) is deflected in the direction of the longitudinal axis of the core tube (15), and **in that** two deflecting elements (22, 23) which are designed as lugs and each comprise an air outlet opening (24) pointing in the direction of the longitudinal axis of the core tube (15) are provided, wherein the air outlet openings (24) of the deflecting elements (22, 23) lie diametrically opposite one another.

2. Device according to Claim 1, wherein the core tube (15) and/or the casing tube (16) are/is surrounded at least in sections by a guide tube (19), wherein the guide tube (19) has an air inlet opening (20) which is connected via a supply duct (9) to a fan (8).

3. Device according to Claim 2, wherein the device is designed in such a manner that air can flow from the air inlet opening (20) into a region between the core tube (15) and the casing tube (16).

4. Device according to one of the preceding claims, wherein the deflecting elements (22, 23) project beyond the opening (18) in the core tube (15) in the longitudinal direction of the core tube (15) and have an air duct which is fluidically connected to the region between the core tube (15) and the casing tube (16) and has a curvature in the direction of the longitudinal axis of the core tube (15).

5. Device according to one of the preceding claims, wherein the pneumatic conveying duct (4) opens into the storage container (1) in a vertical direction.

6. Device according to Claim 2, wherein a bypass line (11) branches off from the supply duct (9) or directly from the fan (8) and opens into the pneumatic conveying duct (4) outside the storage container (1).

7. Device according to one of the preceding claims, wherein the deflecting elements (22, 23) comprise an air outlet opening (24) pointing in the direction of the longitudinal axis of the core tube (15), wherein the size of the air outlet opening (24) is adjustable, in particular by means of one or more threaded rods (25) .

8. Device according to one of Claims 2-7, wherein at least one bore (26) is provided in the core tube (15), via which air can flow from the air inlet opening (20) directly into the core tube (15).

9. Sowing machine comprising a device according to one of the preceding claims.

## Revendications

1. Dispositif de transport d'un matériau granulaire à épandre sur une surface agricole, comprenant:
un réservoir de stockage (1) pour le matériau granulaire;
un dispositif d'ensemencement (5); et
un canal de transport pneumatique (4) pour le transport pneumatique de matériau granulaire du réservoir de stockage (1) au dispositif d'ensemencement (5);
dans lequel le canal de transport pneumatique (4) débouche dans le réservoir de stockage (1) et est disposé en partie à l'intérieur du réservoir de stockage (1),
dans lequel le canal de transport pneumatique (4) comprend à l'intérieur du réservoir de stockage (1) un tube central (15) qui est entouré au moins en partie par un tube extérieur (16),
**caractérisé en ce que** le dispositif comprend deux éléments de déviation (22, 23), qui sont configurés de telle manière que de l'air, qui circule entre le tube central (15) et le tube extérieur (16) en direction d'une ouverture (18) du tube central (15), soit dévié dans la direction de l'axe longitudinal du tube central (15), et **en ce qu'**il est prévu deux éléments de déviation réalisés sous forme de nez (22, 23), qui comprennent respectivement une ouverture de sortie d'air (24) orientée dans la direction de l'axe longitudinal du tube central (15), dans lequel les ouvertures de sortie d'air (24) des éléments de déviation (22, 23) sont diamétralement opposées.

2. Dispositif selon la revendication 1, dans lequel le tube central (15) et/ou le tube extérieur (16) est entouré au moins localement par un tube de guidage (19), dans lequel le tube de guidage (19) présente une ouverture d'entrée d'air (20), qui est raccordée à une soufflante (8) par un canal d'alimentation (9).

3. Dispositif selon la revendication 2, dans lequel le dispositif est configuré de telle manière que de l'air puisse s'écouler de l'ouverture d'entrée d'air (20) à une région située entre le tube central (15) et le tube extérieur (16).

4. Dispositif selon l'une quelconque des revendications précédentes, dans lequel les éléments de déviation (22, 23) se prolongent dans la direction longitudinale du tube central (15) au-delà de l'ouverture (18) du tube central (15) et présentent un canal d'air, qui est en communication fluidique avec la région située entre le tube central (15) et le tube extérieur (16) et qui présente une courbure dans la direction de l'axe longitudinal du tube central (15).

5. Dispositif selon l'une quelconque des revendications précédentes, dans lequel le canal de transport pneumatique (4) débouche en direction verticale dans le réservoir de stockage (1).

6. Dispositif selon la revendication 2, dans lequel une conduite de dérivation (11) part du canal d'alimentation (9) ou directement de la soufflante (8), et débouche dans le canal de transport pneumatique (4) à l'extérieur du réservoir de stockage (1).

7. Dispositif selon l'une quelconque des revendications précédentes, dans lequel les éléments de déviation (22, 23) comprennent une ouverture de sortie d'air (24) orientée dans la direction de l'axe longitudinal du tube central (15), dans lequel la grandeur de l'ouverture de sortie d'air (24) est réglable, en particulier au moyen d'une ou de plusieurs tiges filetées (25).

8. Dispositif selon l'une quelconque des revendications 2 à 7, dans lequel il est prévu dans le tube central (15) au moins un orifice (26), par lequel de l'air peut s'écouler directement de l'ouverture d'entrée d'air (20) dans le tube central (15).

9. Semoir comprenant un dispositif selon l'une quelconque des revendications précédentes.
